# FASCICULE DE BREVET EUROPEEN

(11) **EP 1 332 057 B1**
(45) Date de publication et mention de la délivrance du brevet: **10.05.2006**
(21) Numéro de dépôt: 01992649.2
(22) Date de dépôt: 06.11.2001
(51) Int. Cl.: B60J 7/02

(54) **TOIT ESCAMOTABLE POUR VEHICULE, COMPRENANT UN ELEMENT ARTICULE AU CHASSIS**
ZURÜCKZIEHBARES KRAFTFAHRZEUGDACH MIT EINEM AM CHASSIS ANGELENKTEM ELEMENT
MOTOR VEHICLE RETRACTABLE ROOF, COMPRISING AN ELEMENT ARTICULATED TO THE CHASSIS

(30) Priorité: 06.11.2000 FR 0014188
(43) Date de publication de la demande: 06.08.2003
(73) Titulaire: France Design, 79140 Cerizay (FR)
(72) Inventeur: QUEVEAU, Gérard, F-79140 Le Pin (FR); GUILLEZ, Jean-Marc, F-79140 Cirières (FR)
(74) Mandataire: Geismar, Thierry
(86) Numéro de dépôt international: PCT/FR2001/003433
(87) Numéro de publication internationale: WO 2002/036375

(56) Documents cités:
- EP-A- 0 835 778
- DE-A- 3 903 358

## Description

La présente invention concerne un toit escamotable ou rétractable dans le coffre arrière d'un véhicule.

Un tel toit escamotable permet notamment de transformer un véhicule du type coupé à deux places ou coupé ou berline à quatre places en un véhicule du type cabriolet.

Dans le cas des coupés ou berlines à quatre places, le toit présente une longueur relativement importante, de sorte que le toit escamotable est composé de trois éléments dont chacun a une longueur compatible avec les dimensions du coffre du véhicule.

On connaît ainsi, par exemple du document EP-A-0 835 778, un toit escamotable pour véhicule, comprenant un élément de toit avant, un élément de toit intermédiaire et un élément de toit arrière, ces trois éléments étant mobiles entre une position dans laquelle, ils recouvrent l'habitacle du véhicule et une position dans laquelle, ils sont superposés sensiblement horizontalement dans le coffre arrière du véhicule, la partie arrière de l'élément arrière étant articulée en un point fixe du châssis.

Le but de la présente invention est d'apporter des perfectionnements aux moyens connus, pour commander et guider d'une manière optimale le déplacement des éléments du toit entre leur position de fermeture et leur position de rangement dans le coffre.

Suivant l'invention, le toit escamotable est caractérisé en ce que la partie avant de l'élément arrière est reliée de façon articulée à l'arrière de l'élément intermédiaire, en ce que l'élément intermédiaire est relié de façon articulée par un bras articulé en un point fixe du châssis, les articulations de ce bras formant avec les articulations de l'élément arrière, un quadrilatère déformable, en ce que l'élément intermédiaire comporte une glissière s'étendant entre ses bords avant et arrière et dans laquelle est engagé un doigt porté par l'arrière de l'élément avant pour que ce dernier puisse coulisser sur l'élément intermédiaire, en ce que cet élément intermédiaire est relié à l'élément avant par un levier articulé à cet élément et près de l'avant de l'élément intermédiaire, ce levier étant lui-même relié de façon articulée audit bras par une biellette.

D'autres particularités et avantages de l'invention apparaîtront encore dans la description ci-après.

Aux dessins annexés, donnés à titre d'exemples non limitatifs :
- La figure 1 est une vue schématique en coupe longitudinale partielle d'un véhicule équipé d'un toit escamotable selon l'invention, en position fermée ;
- La figure 2 est une vue analogue à la figure 1, le toit escamotable étant dans une position intermédiaire ;
- La figure 3 est une vue analogue aux figures 1 et 2, le toit escamotable étant en position rangée dans le coffre du véhicule.

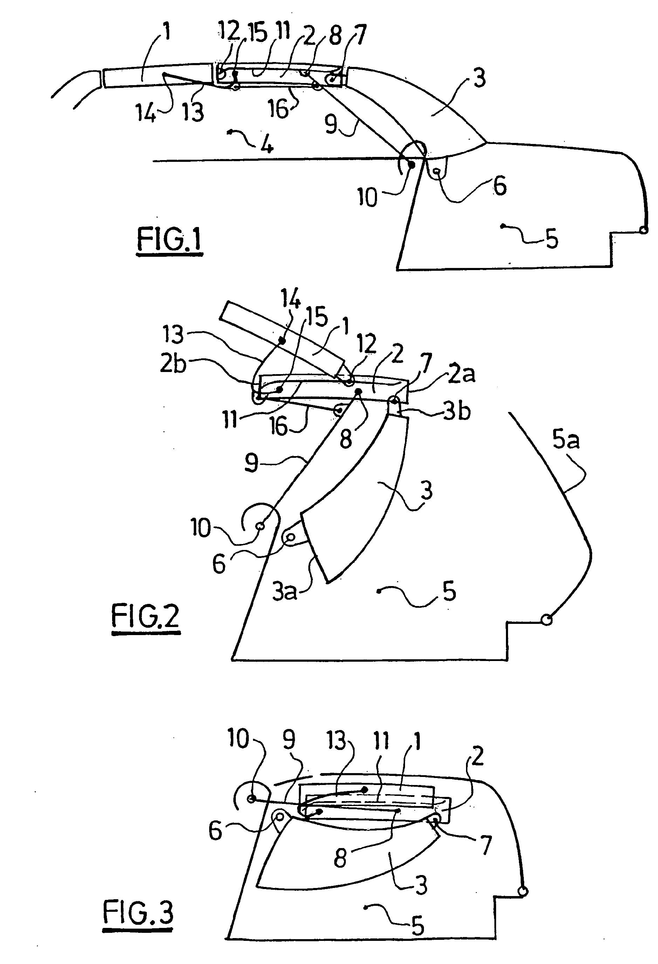

Dans la réalisation représentée sur les figures 1 à 3, le toit escamotable comprend un élément de toit avant 1, un élément de toit intermédiaire 2 et un élément de toit arrière 3. Ces trois éléments 1, 2, 3 sont mobiles entre une position dans laquelle (voir figure 1), ils recouvrent l'habitacle 4 du véhicule et une position dans laquelle (voir figure 3), ils sont superposés sensiblement horizontalement dans le coffre arrière 5 du véhicule.

Conformément à l'invention, la partie arrière 3a de l'élément arrière 3 est articulée en un point fixe 6 du châssis. La partie avant 3b de cet élément arrière 3 est reliée de façon articulée en 7 à l'arrière 2a de l'élément intermédiaire 2.

L'élément intermédiaire 2 est relié de façon articulée en 8 par un bras 9 articulé en un point fixe 10 du châssis.

Les articulations 8, 10 de ce bras 9 forment avec les articulations 6, 7 de l'élément arrière 3, un quadrilatère déformable.

Par ailleurs, l'élément intermédiaire 2 comporte une glissière 11 s'étendant entre ses bords avant 2b et arrière 2a et dans laquelle est engagé un doigt 12 porté par l'arrière de l'élément avant 1 pour que ce dernier puisse coulisser sur l'élément intermédiaire 2, comme montré par la figure 2.

D'autre part, l'élément intermédiaire 2 est relié à l'élément avant 1 par un levier 13 articulé en 14 à cet élément 1 et en 15 près de l'avant de l'élément intermédiaire 2. En outre, le levier 13 est relié de façon articulée au bras 9 par une biellette 16.

Le toit rétractable que l'on vient de décrire fonctionne comme expliqué ci-après.

Après déverrouillage des éléments 1, 2, 3 et ouverture du couvercle 5a du coffre 5, le basculement vers l'arrière de l'élément arrière 3 commandé par un moteur ou un vérin, entraîne dans son mouvement l'élément intermédiaire 2.

Le déplacement vers l'arrière de l'élément intermédiaire provoque le pivotement du levier 9 vers l'arrière.

Le pivotement du levier 9 provoque grâce à la biellette 16, le basculement du levier 13 qui provoque le soulèvement de l'élément avant 1 et l'engagement du doigt 12 de cet élément 1 dans la glissière 11 de l'élément intermédiaire 2.

L'élément avant 1 se superpose ainsi en coulissant sur l'élément 2.

Le mouvement se poursuit ainsi jusqu'à ce que les trois éléments 1, 2, 3 se superposent sensiblement horizontalement dans le coffre 5, comme indiqué sur la figure 3.

## Revendications

1. Toit escamotable pour véhicule, comprenant un élément de toit avant (1), un élément de toit intermédiaire (2) et un élément de toit arrière (3), ces trois éléments étant mobiles entre une position dans laquelle, ils recouvrent l'habitacle (4) du véhicule et une position dans laquelle, ils sont superposés sensiblement horizontalement dans le coffre arrière (5) du véhicule, la partie arrière de l'élément arrière (3) est articulée en un point fixe 6) du châssis, **caractérisé en ce que** la partie avant de l'élément arrière (3) est reliée de façon articulée à l'arrière de l'élément intermédiaire (2), **en ce que** l'élément intermédiaire (2) est relié de façon articulée par un bras (9) articulé en un point fixe (10) du châssis, les articulations (8, 10) de ce bras (9) formant avec les articulations (6, 7) de l'élément arrière (3), un quadrilatère déformable, **en ce que** l'élément intermédiaire (2) comporte une glissière (11) s'étendant entre ses bords avant et arrière et dans laquelle est engagé un doigt (12) porté par l'arrière de l'élément avant (1) pour que ce dernier puisse coulisser sur l'élément intermédaire (2), **en ce que** cet élément intermédiaire (2) est relié à l'élément avant (1) par un levier (13) articulé à cet élément (1) et près de l'avant de l'élément intermédiaire (2), ce levier (13) étant lui-même relié de façon articulée audit bras (9) par une biellette (16).

## Patentansprüche

1. Fahrzeugschiebedach, das ein vorderes Dachelement (1), ein mittleres Dachelement (2) und ein hinteres Dachelement (3) umfasst, wobei diese drei Elemente zwischen einer Stellung, in der sie den Fahrgastraum (4) des Fahrzeugs bedecken und einer Stellung, in der sie etwa waagrecht im Kofferraum (5) des Fahrzeugs übereinander gelagert sind, bewegt werden können, **dadurch gekennzeichnet, dass** der hintere Teil des hinteren Elements (3) mit einem Fixpunkt (6) des Fahrgestells beweglich verbunden ist, **dadurch gekennzeichnet, dass** der vordere Teil des hinteren Elements (3) über ein Gelenk mit der Rückseite des mittleren Elements (2) verbunden ist, dass das mittlere Element (2) über einen beweglichen Arm (9) mit einem Fixpunkt (10) des Fahrgestells beweglich verbunden ist, wobei die Gelenke (8, 10) dieses Arms (9) mit den Gelenken (6, 7) des hinteren Elements (3) ein verformbares Viereck bilden, **dadurch gekennzeichnet, dass** das mittlere Element (2) eine sich von seinem vorderen bis zu seinem hinteren Rand erstreckende Schiene (11) umfasst, in welche ein Zapfen (12) eingefügt ist, der von der Rückseite des vorderen Elements (1) gehalten wird, damit dieser auf dem mittleren Element (2) gleiten kann, **dadurch gekennzeichnet, dass** dieses mittlere Element (2) mit dem vorderen Element (1) durch einen mit diesem Element (1) beweglich verbundenen Hebel (13) in der Nähe der Vorderseite des mittleren Elements (2) verbunden ist, wobei dieser Hebel (13) wiederum über eine Schubstange (16) mit besagtem Arm (9) verbunden ist.

## Claims

1. A retractable roof for a vehicle, said roof comprising a front roof element (1), an intermediate roof element (2), and a rear roof element (3), the three roof elements being mounted to move between a position in which they cover the passenger compartment (4) of the vehicle and a position in which they are superposed substantially horizontally in the rear trunk (5) of the vehicle, the rear portion of the rear element (3) being hinged to a fixed point (6) of the chassis, said retractable roof being **characterized in that** the front portion of the rear element (3) is connected in hinged manner to the rear of the intermediate element (2), **in that** the intermediate element (2) is connected in hinged manner via an arm (9) hinged to a fixed point (10) of the chassis, the hinges (8, 10) of said arm (9) and the hinges (6, 7) of the rear element (3) together forming a deformable quadrilateral, **in that** the intermediate element (2) is provided with a slideway (11) which extends between its front edge and its rear edge, and in which a finger (12) carried by the rear of the front element (1) is engaged so that said front element can slide on the intermediate element (2), and **in that** said intermediate element (2) is connected to the front element (1) via a lever (13) hinged to said element (1) and close to the front of the intermediate element (2), said lever (13) itself being connected in hinged manner to said arm (9) via a link (16).
